Europäisches Patentamt

**European Patent Office**

Office européen des brevets

(19)

(11) Veröffentlichungsnummer: **0 059 899**
**B1**

(12) ## EUROPÄISCHE PATENTSCHRIFT

(45) Veröffentlichungstag der Patentschrift:
**16.10.85**

(51) Int. Cl.⁴: **C 04 B 35/56, C 04 B 38/00**

(21) Anmeldenummer: **82101483.4**

(22) Anmeldetag: **26.02.82**

(54) **Verfahren zur Herstellung eines porösen Siliziumkarbidkörpers.**

(30) Priorität: **05.03.81 DE 3108266**

(43) Veröffentlichungstag der Anmeldung:
**15.09.82 Patentblatt 82/37**

(45) Bekanntmachung des Hinweises auf die Patenterteilung:
**16.10.85 Patentblatt 85/42**

(84) Benannte Vertragsstaaten:
**AT BE CH FR GB LI NL SE**

(56) Entgegenhaltungen:
EP - A - 0 011 841
EP - A - 0 034 328
DE - A - 2 232 719
DE - A - 2 544 288
GB - A - 828 211
GB - A - 1 328 249
US - A - 3 100 688
US - A - 3 536 793

Singer "Industrial Ceramics" 1979, S. 521, 522

(73) Patentinhaber: **Kernforschungsanlage Jülich Gesellschaft mit beschränkter Haftung, Postfach 1913, D-5170 Jülich (DE)**

(72) Erfinder: **Gupta, Ashok Kumar, Artilleriestrasse 49, D-5170 Jülich (DE)**
Erfinder: **Gyarmati, Ernö, Dr., Lorsbecker Strasse 54, D-5170 Jülich (DE)**
Erfinder: **Kreutz, Hermann, Försterweg 3 b, D-4050 Mönchengladbach 3 (DE)**
Erfinder: **Münzer, Rudolf, Tilsiterstrasse 7, D-5110 Alsdorf (DE)**
Erfinder: **Naoumidis, Aristides, Dr., Kreisbahnstrasse 30, D-5170 Jülich (DE)**
Erfinder: **Nickel, Hubertus, Prof., Am Waldeck 5, D-5170 Jülich 5 (DE)**

## Beschreibung

Die Erfindung bezieht sich auf ein Verfahren zur Herstellung eines porösen Siliziumkarbidkörpers durch Silizierung eines porösen Kohlekörpers.

Die Herstellung von Siliziumkarbidkörpern durch Silizierung von Kohlekörpern oder kohlenstoffhaltigen Körpern ist seit langem bekannt. So werden dichte SiC-Körper gemäss der GB-A-828 211 dadurch erhalten, dass aus Siliziumkarbidpulver unterschiedlicher Korngrösse bei 2300°C ein poröser Vorkörper hergestellt wird, der nach pyrolytischer Imprägnierung mit Kohlenstoff bei 2100–2300°C erneut siliziert wird. Siliziumkarbidkörper mit besonders günstigen Festigkeitseigenschaften werden nach der EP-A-111 841 hergestellt, indem ein etwa 1400–1500°C heisser Kohlevorkörper mit einer bevorzugten Dichte von 0,9–1,2 g/cm³ durch Aufstreuen von Siliziumpulver mit Silizium imprägniert und bei 1800–2000°C zu SiC umgesetzt wird, wodurch Dichten in der Gegend von 3,00–3,14 g/cm³ erzielt werden.

Auch die Herstellung von porösen Siliziumkarbidkörpern, die u.a. für die Filtration heisser Gase und korrosiver Flüssigkeiten und als Katalysatorträger – um nur die wichtigsten Beispiele zu nennen – geeignet sind, wurde bereits 1961 in der US-A-3 100 688 beschrieben. Hiernach wird eine Mischung aus Kohlenstoff- und elementarem Siliziumpulver im bestimmten Verhältnis zueinander hergestellt und mit Flusssäure versetzt. Durch die Reaktion zwischen Silizium und Flusssäure findet eine Gasbildung im Material statt, wodurch es sich schaumartig aufbläht. Der gebildete «feste Schaum» wird anschliessend getrocknet und in 2 Stunden auf 1400°C erhitzt und eine Stunde lang bei 1400°C gehalten. Die Temperatur wird dann zuerst in einer halben Stunde auf 1500°C erhöht, für eine Stunde hier belassen und zum Schluss in einer halben Stunde auf 1850°C gesteigert.

Die Herstellung von porösem Siliziumkarbid nach diesem Verfahren weist zwei Schwierigkeiten auf. Erstens ist die Handhabung mit Flusssäure nicht nur gefährlich und gesundheitsschädlich, sondern erfordert teure Apparaturen, um seiner Ätzwirkung entgegenzuwirken. Zweitens ist die Glühbehandlung kompliziert und für einen Ofenbetrieb unvorteilhaft, immer wieder von Raumtemperatur an bis zu sehr hohen Temperaturen fahren zu müssen.

Nach einem weiteren bekannten Verfahren (GB-A-1 328 249) werden poröse SiC-Körper dadurch erhalten, dass man einen porösen Kohlekörper mit einer Dichte von 1,4 bis 1,5 g/cm³ mit geschmolzenem Silizium bei 1500–1700°C imprägniert und durch Kontakt mit einem porösen Graphitkörper bei 1500–1600°C überschüssiges Silizium vom imprägnierten Körper entfernt, wobei gleichzeitig SiC entsteht, und schliesslich im Körper enthaltenen überschüssigen Kohlenstoff abbrennt. Auch dieses Verfahren ist ziemlich aufwendig und die erzielbare Porosität stark von den Verfahrensbedingungen abhängig.

Ziel der Erfindung ist daher ein vereinfachtes Verfahren zur Erzeugung von porösen SiC-Körpern, das zu Produkten führt, deren Qualität weniger empfindlich von der engen Kontrolle der Verfahrensbedingungen abhängt.

Dieses Ziel wird dadurch erreicht, dass man ausgehend von einem mit 15 bis 30 Gew.% verkokbarem Bindemittel versehenen Kohlenstoffpulver aus Körnern einheitlicher Siebfraktion mit einer entsprechend Petrolkoks, Elektrografit, Holzkohle u.dgl. nicht absolut kompakten Struktur durch Pressformen eines Vorkörpers, Austreiben von verflüchtigbaren Anteilen zwischen 40 und 200°C und anschliessende Verkokungsbehandlung bis 850°C in an sich bekannter Weise einen Kohlekörper mit einer Dichte von 0,5 bis 0,9 g/cm³ herstellt und den so erhaltenen Kohlekörper entweder zwischen 1650 und 1950°C mit gasförmigem Silizium siliziert oder durch Tauchen in eine Siliziumschmelze mit Silizium imprägniert und umsetzt, dessen Reste ausgedampft oder durch Kochen in Lauge entfernt werden.

Als Siebfraktion des Kohlenstoff- oder Kohlenstoff/Siliziumkarbid-Pulvers zur Herstellung des Vorkörpers dienen insbesondere Fraktionen von 53 bis 105 µm Korngrösse; 105 bis 150 µm Korngrösse; 150 bis 300 µm Korngrösse; 300 bis 600 µm Korngrösse bzw. 600 bis 1000 µm Korngrösse.

Die Verwendung von Ausgangspulvern bestimmter Siebfraktionen zur Herstellung von porösen Körpern ist zwar von der Metallfilterherstellung und auch der Herstellung von porösen SiC-Körpern oder Kohlekörpern aus SiC-Pulver oder C-Pulver nicht unbekannt (s. Singer «Industrial Ceramics», Chapman & Hall, London 1979, Seiten 521–22), jedoch werden hier Pulver für die Filterherstellung verwendet, deren Material dem Material des fertigen Produktes entspricht. Gemäss der Erfindung wird dagegen ein poröser Körper aus nur einer Komponente des herzustellenden Filtermaterials, die nur 25 bis 30 Gew.% des fertigen Filters ausmacht, mit der zur Bildung des Filtermaterials erforderlichen weiteren Komponente imprägniert und umgesetzt, wobei nicht ohne weiteres vorauszusetzen war, dass ein brauchbares poröses Material entstehen würde.

Dem zur Bildung des Vorkörpers verwendeten Kohlenstoffpulver kann ggf. auch Siliziumkarbid beigemischt sein. Das Pulver wird mit etwa 15 bis 30% Binder, insbesondere um etwa 20 Gew.% Binder wie Pech, Teer, Phenolformaldehydharz, Zuckerlösung, wasserlöslicher Zellulose, Stärke, Wachsemulsion, Polyvinylalkoholmischungen u.ä. vermischt. Der Binder soll dabei über die Kornmasse möglichst gleichmässig verteilt werden, was beispielsweise durch ein Wirbelschichtverfahren zu erreichen ist. Aus dieser Pulvermasse werden Platten, Hülsen o.dgl. gepresst. Bei Mitverwendung von SiC kann dessen Anteil bis zu 70% des Pulvers ausmachen, vorzugsweise sollten jedoch nur etwa 50% SiC mitverwendet werden, dessen höhere Dichte ($\rho$ = 3,22 g/cm³ im Vgl. zu 2,2 g/cm³, der Dichte von C) bei der anzustrebenden Dichte des zu silizierenden Kohlekörpers selbstverständlich berücksichtigt werden muss.

Je nach Binderart werden die Presskörper zwischen 40 und 200 °C «getrocknet», d.h. einer Wärmebehandlung unterworfen, die zum Austreiben verflüchtigbarer Anteile ausreicht. Anschliessend werden die Presskörper bei Temperaturen bis 850 °C verkokt, insbesondere mit einer Aufheizgeschwindigkeit von etwa 5 °C/min.

Der ausgehend von einer einheitlichen Kornfraktion auf diese Weise erhaltene poröse Kohlevorkörper hat eine Dichte von etwa 0,5 bis 0,9 g/cm³, insbesondere zwischen etwa 0,6 und 0,7 g/cm³. Enthält das Ausgangspulver SiC, so kann die Dichte des zu silizierenden Vorkörpers bis etwa 1,5 g/cm³ betragen. Der Vorkörper wird zur Umwandlung der Kohlenstoffkomponente zu Siliziumkarbid im Temperaturbereich von 1450 bis 2100 °C mit gasförmigem oder flüssigem Silizium behandelt. Bei der Gasphasensilizierung zwischen 1650 und 1950 °C entsteht aus dem porösen Kohlenstoff ein poröses Siliziumkarbid, und das Produkt kann direkt aus dem Ofen herausgeschleust werden. Wird der Vorkörper in eine Siliziumschmelze getaucht, so reagiert diese nicht nur mit dem Kohlenstoff, sondern füllt alle zur Verfügung stehenden Poren. Um die Porosität wiederzuerlangen, wird das Silizium aus dem SiC-Si-Körper bei 1900 bis 2100 °C für 0,5 bis 2 h verdampft oder durch 2–8 h Kochen in Lauge, insbesondere Natronlauge, entfernt.

Beispiel 1

Es wurde eine 10 mm dicke poröse Platte mit Elektrographit als Füllerkorn mit einer Siebfraktion des Füllers von 105 bis 150 μm hergestellt. Die Dichte der Platte betrug 0,6 g/cm⁻³. Nach einer 2-stündigen Behandlung in einer Siliziumgasatmosphäre bei 1850 °C erreichte die Dichte einen Wert von 2,00 g/cm⁻³. Die Durchflussleistung der Platte betrug für Luft bei Raumtemperatur bei 7 bar Vordruck 3,5 m³/cm² h.

Beispiel 2

Eine Platte mit einer Dicke von 5 mm, einer Füllerkornfraktion von 53 bis 105 μm und einer Dichte von 0,7 g/cm⁻³ wurde in der Gasphase (bei 1850 °C) siliziert. Nach einer Reaktionsdauer von 2 Stunden erreichte die Plattendichte einen Wert von 2,33 g/cm⁻³. Die Durchflussleistung bei 7 bar Vordruck für Luft bei Raumtemperatur lag bei 1,5 m³/cm² h.

Beispiel 3

Es wurde eine 5 mm dicke poröse Platte mit Elektrographit und α-Siliziumkarbid als Füllerkorn im Siebfraktionsbereich von 150 bis 300 μm in einer Siliziumschmelze bei 1750 °C für 10 Minuten siliziert und anschliessend bei 2000 °C 1,5 h lang erhitzt. Die Platte mit einer Dichte von 2,30 g/cm⁻³ hatte eine Durchflussleistung bei den im Beispiel 1 angegebenen Bedingungen von etwa 2,3 m³/cm² h.

Beispiel 4

Eine Hülse mit einer 3 mm Wanddicke mit Petrolkoks und α-SiC als Füllerkorn im Siebbereich von 300 bis 600 μm wurde bei 1800 °C mit Silizium infiltriert. Nach 10-minutiger Reaktionsdauer wurde die Hülse für 8 h in 10%iger NaOH-Lösung gekocht. Die Dichte der Hülse betrug 2,5 g/cm⁻³ und die Durchflussleistung 4,5 m³/cm² h.

Beispiel 5

Eine kegelförmige Patrone wurde mit einer Wandstärke von 8 mm mit Pflanzenkohle, Pechkoks und Siliziumkarbid als Füllerkorn im Siebbereich von 600 bis 1000 μm und einer Dichte von 1,5 g/cm⁻³ hergestellt. Nach einer 10-minutigen Silizierung bei 1650 °C und anschliessendem Kochen in 10%iger NaOH-Lösung für 4 Stunden wurde eine Dichte von 2,4 g/cm⁻³ und eine Durchflussleistung von 4,0 m³/cm² h erhalten.

## Patentansprüche

1. Verfahren zur Herstellung eines porösen Siliziumkarbidkörpers durch Silizierung eines porösen Kohlekörpers, dadurch gekennzeichnet, dass man ausgehend von einem mit 15 bis 30 Gew.% verkokbarem Bindemittel versehenen Kohlenstoffpulver aus Körnern einheitlicher Siebfraktion mit einer entsprechend Petrolkoks, Elektrografit, Holzkohle u.dgl. nicht absolut kompakten Struktur durch Pressformen eines Vorkörpers, Austreiben von verflüchtigbaren Anteilen zwischen 40 und 200 °C und anschliessende Verkokungsbehandlung bis 850 °C in an sich bekannter Weise einen Kohlekörper mit einer Dichte von 0,5 bis 0,9 g/cm³ herstellt und den so erhaltenen Kohlekörper entweder zwischen 1650 und 1950 °C mit gasförmigem Silizium siliziert oder durch Tauchen in eine Siliziumschmelze mit Silizium imprägniert und umsetzt, dessen Reste ausgedampft oder durch Kochen in Lauge entfernt werden.

2. Verfahren nach Anspruch 1, dadurch gekennzeichnet, dass man zur Herstellung des Kohlekörpers eine Siebfraktion aus dem Bereich zwischen 50 und 1000 μm insbesondere in der Gegend von einigen 100 μm verwendet.

3. Verfahren nach Anspruch 1 oder 2, dadurch gekennzeichnet, dass man einen porösen Kohlenstoffkörper mit einer Dichte von 0,6 bis 0,7 g/cm³ herstellt.

4. Verfahren nach einem der vorangehenden Ansprüche, dadurch gekennzeichnet, dass zur Herstellung des Kohlevorkörpers um 20 Gew.% Bindemittel verwendet werden.

5. Verfahren nach einem der vorangehenden Ansprüche, dadurch abgewandelt, dass man dem Kohlepulver bis zu 70% SiC gleicher Korngrösse zumischt und bei der Dichte des nach dem Verkoken zu silizierenden Körpers den SiC-Anteil berücksichtigt.

## Claims

1. Method of producing a porous silicon carbide article by siliconisation of a porous carbon body, characterised in that, starting from a carbon powder which is provided with 15 to 30% by weight of coking binding agent and which comprises grains of uniforms sieve fraction, with a not absolutely compact structure corresponding to petrol coke, electrographite, charcoal and the like, by press-forming of a preliminary body, expelling volatile components between 40 and 200 °C and then coking treatment to 850 °C in a manner known per se a carbon body with a density of 0.5 to 0.9 g/cm³ is produced, and the carbon body thus obtained is either siliconised between 1650 and 1950 °C with gaseous silicon or, by immersion in a silicon melt, impregnated with silicon and reacted, the residues thereof being removed by evaporation or by boiling in an alkaline solution.

2. Method according to claim 1, characterised in that a sieve fraction in the range between 50 and 1000 μm, especially in the vicinity of a few 100 μm, is used for production of the carbon body.

3. Method according to claim 1 or 2, characterised in that a porous carbon preliminary body with a density of 0.6 to 0.7 g/cm³ is produced.

4. Method according to one of the preceding claims, characterised in that about 20% by weight of binding agent is used for producing the carbon preliminary body.

5. Method according to one of the preceding claims, modified in that up to 70% SiC of like grain size is admixed with the carbon powder, and the SiC fraction is taken into account in the matter of the density of the body to be siliconised after coking.

**Revendications**

1. Procédé de fabrication d'un corps poreux en carbure de silicium par siliciation d'un corps poreux en charbon, caractérisé en ce qu'il consiste à préparer d'une manière en soi connue, à partir d'une poudre de carbone munie de 15 à 30% en poids d'agent liant cokéfiable et constituée de grains en une fraction granulométrique unitaire ayant une structure adéquate qui n'est pas absolument compacte, de coke de pétrole, d'électrographite, de charbon de bois et autres matières semblables, un corps en charbon ayant une masse volumique de 0,5 à 0,9 g/cm³, en moulant une ébauche par compression, en chassant des parties volatilisables entre 40 et 200 °C, et en effectuant ensuite un traitement de cokéfaction jusqu'à 850 °C, et à silicier le corps en charbon ainsi obtenu entre 1650 et 1950 °C par du silicium gazeux ou à l'imprégner de silicium et à le faire réagir sur celui-ci en l'immergeant dans du silicium fondu, dont les résidus sont chassés par évaporation ou sont éliminés par ébullition dans une lessive.

2. Procédé suivant la revendication 1, caractérisé en ce qu'il consiste à utiliser, pour la fabrication du corps en charbon, une fraction granulométrique comprise entre 50 et 1000 μm et notamment de l'ordre de quelques 100 μm.

3. Procédé suivant la revendication 1 ou 2, caractérisé en ce qu'il consiste à fabriquer une ébauche poreuse en carbone ayant une masse volumique de 0,6 à 0,7 g/cm³.

4. Procédé suivant l'une des revendications précédentes, caractérisé en ce qu'il consiste à utiliser, pour la fabrication de l'ébauche en charbon, environ 20% en poids d'agent liant.

5. Procédé suivant l'une des revendications précédentes, caractérisé en ce qu'il consiste à ajouter à la poudre de charbon jusqu'à 70% de SiC de même granulométrie et à tenir compte, pour la masse volumique du corps à silicier après la cokéfaction de la proportion de SiC.